# EUROPÄISCHE PATENTSCHRIFT

(11) **EP 2 094 992 B1**
(45) Veröffentlichungstag und Bekanntmachung des Hinweises auf die Patenterteilung: **13.07.2011**
(21) Anmeldenummer: 07822632.1
(22) Anmeldetag: 15.11.2007
(51) Int. Cl.: F16G 13/20

(54) **GLIEDERKETTE**
LINK CHAIN
CHAINE A MAILLONS

(30) Priorität: 30.11.2006 DE 102006056953; 14.12.2006 DE 102006058948
(43) Veröffentlichungstag der Anmeldung: 02.09.2009
(73) Patentinhaber: KINTEC-SOLUTION GMBH, 59590 Geseke (DE)
(72) Erfinder: MACKERT, Michael, 59602 Rüthen (DE)
(74) Vertreter: Moser & Götze
(86) Internationale Anmeldenummer: PCT/EP2007/062390
(87) Internationale Veröffentlichungsnummer: WO 2008/065008

(56) Entgegenhaltungen:
- DE-A1- 2 059 143
- FR-A- 2 736 250

## Beschreibung

Die Erfindung betrifft eine Gliederkette mit zwei oder mehr Reihen von Kettenelementen, wobei die Kettenelemente einer Reihe mit denjenigen der benachbarten Reihe in der Kettenebene derart drehbar verbunden sind, dass jedes Kettenelement zwei Drehachsen hat, von denen jede eine der zwei Drehachsen von zwei verschiedenen Kettenelementen in benachbarten Reihen ist.

Eine kontinuierlich veränderbare Fläche mit ähnlichem Aufbau ist aus der DE 20 59 143 A bekannt. Die dort beschriebene Fläche ist in mehrere Reihen von Flächenelementen geteilt, wobei die Flächenelemente einer Reihe mit denjenigen einer benachbarten Reihe in der Flächenebene drehbar derart verbunden, dass jedes Flächenelement zwei Drehpunkte hat, von denen jeder einer der zwei Drehpunkte von zwei verschiedenen Flächenelementen in benachbarten Reihen ist. Dabei sind die Flächenelemente in der gleichen Reihe derart durch Bewegungsübertragungsteile untereinander verbunden, dass die Fläche in ihrer Ebene flexibel ist. Mit dieser Fläche ist es möglich, kontinuierlich veränderbare gekrümmte Flächen durch Regelglieder zu bewirken, die lediglich an einem Ende der jeweiligen Fläche angeordnet sind.

Aufgabe der Erfindung ist es, eine Gliederkette bereitzustellen, bei der die Kette nicht nur eine kontinuierliche Veränderung ihrer Krümmung analog zu der kontinuierlich veränderbaren Fläche der DE 20 59 143 A erlaubt, sondern die eingestellte Krümmung ohne Kraftbeaufschlagung, z.B. durch Stell- oder Regelglieder beibehält.

Diese Aufgabe wird durch die in Anspruch 1 angegebene Gliederkette gelöst.

Da die Kettenelemente einer Reihe der Gliederkette derart durch Verzahnungen ihrer Enden untereinander verbunden sind, dass die Kette in der Kettenebene flexibel ist, und die Drehachsen derart ausgestaltet sind, dass die Kette in einer eingestellten Position verbleibt, ist es möglich, eine solche Gliederkette nicht nur in der Krümmung durch einseitige Einwirkung her zu verändern, sondern die geänderte Einstellung auch nach beendeter Einstellung beizubehalten.

Dies erlaubt vielfältige Einsatzmöglichkeiten, insbesondere bei der Konstruktion von so genannten Sitz-Liege-Sesseln. Solche Sessel weisen eine gegenüber einer Sitzfläche verschwenkbare Rückenlehne und eine ausschwenkbaren Beinauflage auf, wobei der Sessel zwischen einer Sitz- und einer Liegeposition verschwenkbar ist. Sie erlauben eine Verstellung der Position zwischen einer "normalen" aufrechten Sitzposition und einer etwa horizontal ausgerichteten Liegeposition. Die Rückenlehne und/oder Kopfstützen sind dabei ggf. ebenfalls verstellbar und teilweise mit der Verstellbewegung des Sessels gekoppelt oder unabhängig davon manuell einstellbar. So eignet sich eine solche Kette zur Übertragung der Verstellbewegung und der Beibehaltung einer eingestellten Position des Sessels. Somit sind auf einfache und elegante Weise Sessel herstellbar, die eine Vielzahl von einstellbaren Positionen erlauben.

Denkbar ist auch eine Verwendung der Kette in Sofas oder dergleichen zur Kopfstützen-oder Armlehnenverstellung.

Erfindungsgemäss, umfassen die Drehachsen eine Drehmomenteinstellung. Somit kann die "Haltekraft" für eine eingestellte Stellung der Kette vorgegeben werden. Dies erlaubt eine solche Wahl der Parameter, sprich des Drehmoments, dass eine Verstellung der Kette zwar möglich ist, dies aber bewusst erfolgen muss. Es versteht sich, dass eine Vernietung eine besonders einfache Ausführung erlaubt. Allerdings ist jede andere Art der entsprechenden Verbindung ebenfalls einsetzbar, wie z. B. eine Verschraubung. Die Drehachsen weisen eine Kunststoffscheibe und eine Kunststoffbuchse auf. Die Kunststoffscheibe bzw. - buchse sind aus elastischem Kunststoff ausgeführt Die Kunststoffscheibe bzw. -buchse der Drehachse sind derart gestaucht, dass ein Drehmoment der Drehachse einstellbar bzw. vorgebbar ist.

Insbesondere ist vorgesehen, dass die Kunststoffscheibe zwischen den jeweiligen Kettenelementen unterschiedlicher Reihen angeordnet ist. Dabei wird sie Sinnvollerweise von der Drehachse durchgriffen.

Ferner ist es sinnvoll, wenn die Kunststoffbuchse zwischen Niete und Kettenelement angeordnet ist. Dabei wird sie Sinnvollerweise von der Drehachse durchgriffen und an das Kettenelement gepresst.

Somit kann das Drehmoment jeder Drehachse durch die Spannung der Drehverbindung eingestellt werden, da die Kunststoffscheibe bzw. -buchse aufgrund ihrer Elastizität nach der Stauchung eine entsprechende Reibung der Kettenelemente gegeneinander bewirkt, was das beschriebene Drehmoment ergibt.

Besonders bevorzugt ist es, wenn die Drehachsen ein Drehmoment von mindestens 1 NM aufweisen. Dann ist die Kette insbesondere in vorteilhafter Weise in den oben angegebenen Sitz-Liege-Sesseln einsetzbar. So kann durch die Gewichtskraft der Benutzer z. B. die Beinauflage verstellt werden, verharrt jedoch trotz der darauf aufliegenden geringeren Gewichtskraft der Beine in der eingestellten Position. Entsprechendes gilt für die Verwendung in Sofas und dergleichen.

Es ist vorgesehen, dass eine Vernietung der Drehachsen von abwechselnden Seiten der Reihe aus erfolgt.

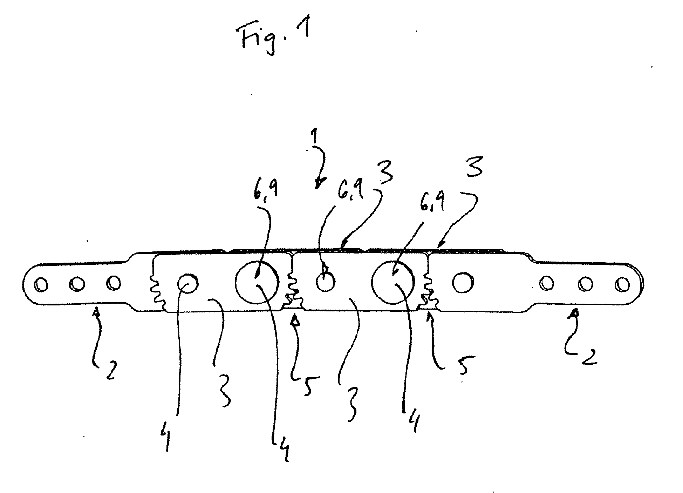

Weitere Einzelheiten und Vorteile ergeben sich aus der nachfolgenden Beschreibung eines Ausführungsbeispieles anhand der Zeichnung, in der
- Fig. 1: eine Gliederkette in etwa linearer Stellung perspektivisch von der Seite her zeigt;

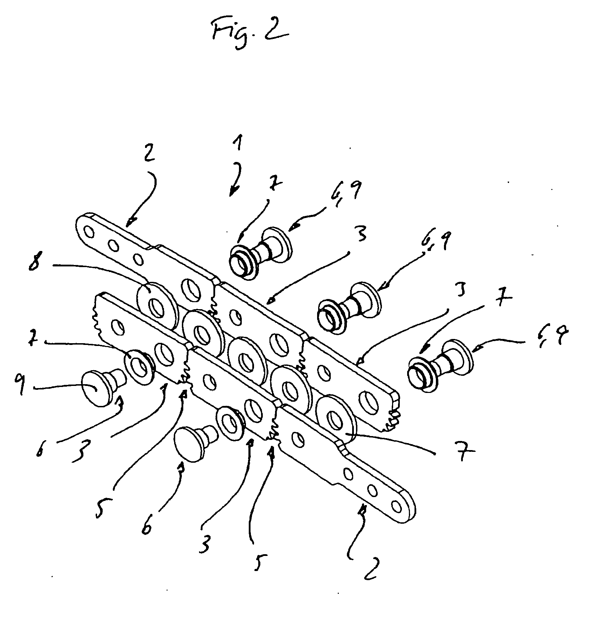

- Fig. 2: die Gliederkette aus Fig. 1 in einer entsprechenden perspektivischen Explosionsansicht;

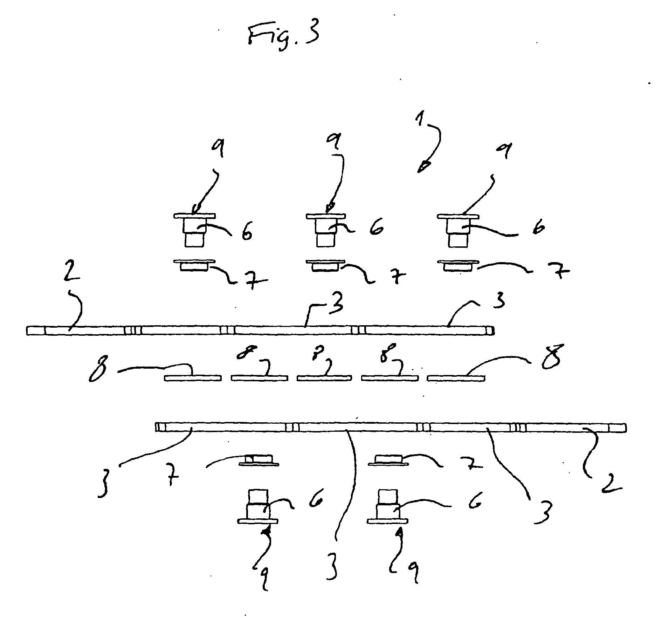

- Fig. 3: die Gliederkette aus Fig. 1 in einer entsprechenden Explosionsansicht von oben und

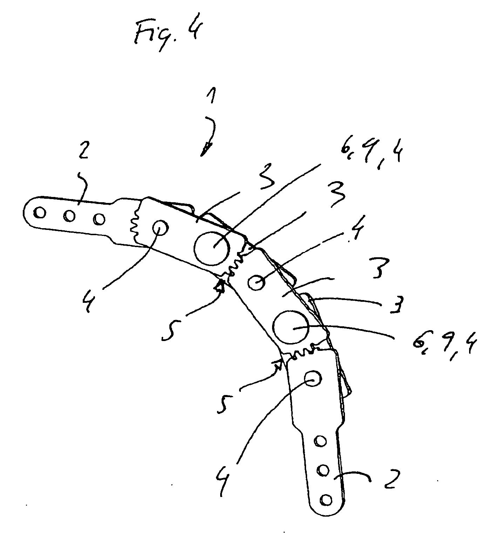

- Fig. 4: die Gliederkette aus Fig. 1 in gekrümmter Stellung perspektivisch von der Seite her zeigt.

In den Figuren ist eine als Ganzes mit 1 bezeichnete Gliederkette dargestellt.

Die Gliederkette 1 umfasst zwei Reihen von Kettenelementen. Jede Reihe umfasst ein Endkettenelement 2 und mehrere Kettenelemente 3. Die Endkettenelemente 2 der Reihen sind an jeweils abgewandten Enden der Gliederkette 1 angeordnet und umfassen Befestigungsmöglichkeiten.

Die Kettenelemente 2 bzw. 3 einer Reihe sind mit denjenigen der benachbarten Reihe in der Kettenebene über Drehachsen 4 drehbar verbunden. Jedes Kettenelement 2 hat zwei Drehachsen 4, von denen jede eine der zwei Drehachsen 4 von zwei verschiedenen Kettenelementen 3 in benachbarten Reihen ist.

Die Endkettenelemente 2 weisen jeweils nur eine Drehachse 4 auf.

Die Kettenelemente 2,3 einer Reihe sind durch Verzahnungen 5 ihrer Enden untereinander verbunden, so dass die Kette in der Kettenebene flexibel ist und eine eingeleitete Bewegung von den Endkettenelementen 2 auf die benachbarten Kettenelemente 3 weitergegeben wird, so dass die Kette in der Krümmung verstellbar ist.

Im vorliegenden Beispiel sind die Drehachsen 4 durch eine Vernietung mittels Nieten 6 hergestellt.

Die Nieten 6 umfassen einen verbreiterten tellerförmigen Kopf 9, der eine Kunststoffbuchse 7 gegen die Oberfläche des jeweiligen Kettenelements einer Reihe drückt. Gleichzeitig greift die Kunststoffbuchse 7 in die entsprechende Bohrung im jeweiligen Kettenelement ein und wird von der Niete 6 durchgriffen.

Die Niete 6 durchgreift ebenfalls das jeweilige andere Kettenelement der benachbarten Reihe, wobei die Niete 6 eine Kunststoffscheibe 8 durchgreift, die zwischen den jeweiligen Kettenelementen 3 der Reihen angeordnet ist.

Die Kunststoffbuchse 7 und die Kunststoffscheibe 8 sind jeweils aus elastischem Material hergestellt, so dass sie bei geeigneter Vernietung gestaucht werden.

Somit wird jede Drehachse 4 mit einer einstellbaren Spannung und Reibung versehen, die ein vorgebbares Drehmoment der jeweiligen Drehachse 4 bewirkt.

Somit kann die Gliederkette 1 durch Einleiten einer Bewegung an einem festgelegten Endkettenelement 2 in ihrer Krümmung durch Aufbringen einer das eingestellte Drehmoment überwindenden Kraft verändert werden. Die eingestellte Krümmung behält die Kette dann bei, bis wiederum eine das eingestellte Drehmoment überwindende Kraft erneut aufgebracht wird.

So kann die Kette z. B. in den oben angegebenen Sitz-Liege-Sesseln eingesetzt werden. Durch die gesamte Gewichtskraft der Benutzer kann dann z. B. die Beinauflage beim Verschwenken des Sessel von einer Position in eine andere verstellt werden, verharrt jedoch trotz der darauf aufliegenden geringeren Gewichtskraft der Beine in der eingestellten Position.

### Bezugszeichenliste

- 1: Kette
- 2: Endkettenelement
- 3: Kettenelement
- 4: Drehachse
- 5: Verzahnung
- 6: Niete
- 7: Kunststoffbuchse
- 8: Kunststoffscheibe
- 9: Kopf der Niete

## Patentansprüche

1. Gliederkette (1) mit zwei oder mehr Reihen von Kettenelementen (2, 3), wobei die Kettenelemente (2, 3) einer Reihe mit denjenigen der benachbarten Reihe in der Kettenebene derart drehbar verbunden sind, dass jedes Kettenelement (3) zwei Drehachsen (4) hat, von denen jede eine der zwei Drehachsen (4) von zwei verschiedenen Kettenelementen (3) in benachbarten Reihen ist, und dass die Kettenelemente (3) einer Reihe derart durch Verzahnungen (5) ihrer Enden untereinander verbunden sind, dass die Kette (1) in der Kettenebene flexibel ist, **dadurch gekennzeichnet, dass** die Drehachsen (4) derart ausgestaltet sind, dass die Kette in einer eingestellten Position verbleibt, wozu die Drehachsen (4) eine Drehmomenteinstellung umfassen, und dass die Drehachsen (4) eine Kunststoffscheibe (8) und eine Kunststoffbuchse (7) aufweisen, die Kunststoffscheibe (8) bzw. -buchse (7) aus elastischem Kunststoff ausgeführt sind und die Kunststoffscheibe (8) bzw. - buchse (7) der Drehachsen (4) derart gestaucht sind, dass ein Drehmoment der Drehachse einstellbar ist.

2. Gliederkette nach Anspruch 1, **dadurch gekennzeichnet, dass** die Kunststoffscheibe (8) zwischen den jeweiligen Kettenelementen (2, 3) unterschiedlicher Reihen angeordnet ist.

3. Gliederkette nach Anspruch 1 oder 2, **dadurch gekennzeichnet, dass** die Kunststoffbuchse (7) zwischen Drehachse (7) und Kettenelement (2, 3) angeordnet ist.

4. Gliederkette nach einem der vorhergehenden Ansprüche, **dadurch gekennzeichnet, dass** die Drehachsen (4) ein Drehmoment von mindestens 1 NM aufweisen.

5. Gliederkette nach einem der vorhergehenden Ansprüche, **dadurch gekennzeichnet, dass** eine Vernietung (6) der Drehachsen (4) von abwechselnden Seiten der Reihe aus erfolgt.

6. Verwendung einer Gliederkette nach einem der vorhergehenden Ansprüche in einem Sessel, insbesondere einem Sitz-Liege-Sessel, oder einem Sofa und dergleichen.

## Claims

1. Link chain (1) having two or more series of chain elements (2, 3), the chain elements (2, 3) forming one series being rotatably connected, in the plane of the chain, to those forming the adjacent series in such a way that each chain element (3) has two shafts for rotation (4), each of which is one of the two shafts for rotation (4) of two different chain elements (3) in adjacent series, and in such a way that the chain elements (3) in one series are so connected together by sets of teeth (5) at their ends that the chain (1) is flexible in its plane, **characterised in that** the shafts for rotation (4) are so designed that the chain remains in a set position, for which purpose the shafts for rotation (4) comprise a means for setting torque and **in that** the shafts for rotation (4) have a washer (8) of plastics material and a bush (7) of plastics material, the washer (8) and bush (7) of plastics material are made of elastic plastics material, and the washer (8) and bush (7) of plastics material on the shafts for rotation (4) are compressed in such a way that a torque can be set for the shafts for rotation.

2. Link chain according to claim 1, **characterised in that** the washer (8) of plastics material is arranged between the respective chain elements (2, 3) of different series.

3. Link chain according to claim 1 or 2, **characterised in that** the bush (7) of plastics material is arranged between the shaft for rotation (7) and the chain element (2, 3)

4. Link chain according to one of the preceding claims, **characterised in that** the torque for the shafts for rotation (4) is at least 1 NM.

5. Link chain according to one of the preceding claims, **characterised in that** riveting (6) of the shafts for rotation (4) takes place from alternating sides of the series.

6. Use of a link chain according to one of the preceding claims in a chair, and in particular a recliner chair, or a sofa or the like.

## Revendications

1. Chaîne à maillons (1) comportant deux séries ou plus d'éléments de chaîne (2, 3), les éléments de chaîne (2, 3) d'une série sont reliés, de manière à pouvoir tourner dans le plan de la chaîne, à la série adjacente de telle sorte que chaque élément de chaîne (3) possède deux axes de rotation (4), dont chacun est l'un des deux axes de rotation (4) de deux éléments de chaîne différents (3) de séries adjacentes, et que les éléments de chaîne (3) d'une série sont reliés entre eux par des dentures (5) à leurs extrémités de telle sorte que la chaîne (1) est flexible dans le plan de la chaîne, **caractérisée en ce que** les axes de rotation (4) sont conformés de telle sorte que la chaîne reste dans une position réglée dans laquelle les axes de rotation (4) présentent un réglage de couple de rotation et **en ce que** les axes de rotation (4) comportent un disque (8) de matière plastique et une douille (7) de matière plastique, le disque (8) ou la douille (7) de matière plastique étant réalisées à partir d'une matière plastique élastique et le disque (8) ou la douille (7) de matière plastique des axes de rotation (4) étant comprimées de façon à régler un couple de rotation de l'axe de rotation.

2. Chaîne à maillons selon la revendication 1, **caractérisée en ce que** le disque (8) de matière plastique est disposé entre les éléments de chaîne respectifs (2, 3) de séries différentes.

3. Chaîne à maillons selon la revendication 1 ou 2, **caractérisée en ce que** la douille (7) de matière plastique est disposée entre l'axe de rotation (7) et l'élément de chaîne (2, 3).

4. Chaîne à maillons selon l'une des revendications précédentes, **caractérisée en ce que** les axes de rotation (4) présentent un couple de rotation d'au moins 1 NM.

5. Chaîne à maillons selon l'une des revendications précédentes, **caractérisée en ce qu'**une rivure (6) des axes de rotation (4) est effectuée alternativement d'un côté et de l'autre de la série.

6. Utilisation d'une chaîne à maillon selon l'une des revendications précédentes dans un fauteuil, notamment un fauteuil de relaxation, ou un sofa ou analogue.
